# EUROPEAN PATENT APPLICATION

(11) **EP 4 667 150 A1**
(43) Date of publication of application: **24.12.2025**
(21) Application number: 24780320.8
(22) Date of filing: 26.03.2024
(51) Int. Cl.: B23Q 3/157

(54) **MAGAZINE DEVICE AND MACHINE TOOL COMPRISING SAME**

(30) Priority: 27.03.2023 JP 2023049615
(71) Applicant: DMG Mori Co., Ltd., Yamatokoriyama-shi, Nara 639-1160 (JP)
(72) Inventor: ISHITSUKA, Makoto, Yamatokoriyama-shi, Nara 639-1160 (JP); NAKAMURA, Susumu, Yamatokoriyama-shi, Nara 639-1160 (JP); KANAIWA, Katsuki, Yamatokoriyama-shi, Nara 639-1160 (JP); MINESHIGE, Tomoyuki, Yamatokoriyama-shi, Nara 639-1160 (JP); SUMIOKA, Kenji, Yamatokoriyama-shi, Nara 639-1160 (JP)
(74) Representative: Isarpatent
(86) International application number: PCT/JP2024/011975
(87) International publication number: WO 2024/204210

(57) **Abstract**

A machine tool includes: a wheel 2 rotatable around a horizontal axis; a plurality of pods 1 that are arranged circumferentially around the wheel 2 to form a circular ring shape on the wheel 2, and hold distal ends of tools T with the distal ends facing radially outward of the wheel; and a conveying unit CU that conveys the tool T between the wheel 2 and a machine tool body 101 equipped with at least a spindle head MS to and from which the tool T is attached and detached. In a view of the wheel 2 along the horizontal axis from the machine tool body 101 side, a tool attachment/detachment position at which the tool T is attached to and detached from the pod 1 by the conveying unit CU is set between a 9 o'clock direction and a 12 o'clock direction, with the zenith of the wheel 2 being at the 12 o'clock direction.

## Description

### Technical Field

The present invention relates to a magazine device including a wheel rotatable about a horizontal axis and a plurality of pods that are arranged circumferentially around the wheel to form a ring shape and hold tools with their distal ends facing radially outward from the wheel, and to a machine tool including the magazine device.

### Background Art

Some machine tools include what is called a wheel-type tool magazine. This type of tool magazine has a circular ring shape, and pods, into which tools can be attached and detached, are arranged circumferentially on the outer circumference of a wheel configured to be rotatable about a horizontal axis. In addition, in some tool magazines, when a tool is exchanged between the tool magazine and a machine tool body equipped with a spindle head, the pod itself to which the tool is attached is conveyed.

For example, in the magazine device disclosed in Patent Document 1, the pod is removed from the wheel at the 9 o'clock direction when the wheel is viewed from the machine tool body side, and the pod itself is conveyed to the ATC unit by a pod slider provided within a guide member extending horizontally.

However, in this magazine device, the wheel is separated significantly in the X-axis direction, which is the horizontal direction, from a column standing in the Y-axis direction, which is the vertical direction, and the pod slider is provided therebetween, making it difficult to reduce the overall width of the machine tool in the X-axis direction. However, if the pod slider is located on the near side of the wheel, at the 9 o'clock position in a view from the machine tool body side, as in a conventional magazine device, an oscillator will interfere in order to enable rotation of, for example, a table on which a workpiece is placed, about a plurality of axes, such as the X-axis and the Y-axis.

### Citation List

### Patent Document

Patent Document 1: JP 2020-199570A

### Summary of Invention

### Technical Problem

The present invention has been made in consideration of the problems described above, and aims to provide a magazine device by which an entire machine tool can be formed compactly while reducing interference between a conveying unit provided between a wheel and a machine tool body, and the devices included in the machine tool body.

### Solution to Problem

That is, the magazine device according to the present invention is characterized by including: a wheel rotatable about a horizontal axis; a plurality of pods that are arranged circumferentially on the wheel to form a circular ring shape on the wheel, and are configured to hold distal ends of tools with the distal ends facing radially outward of the wheel; and a conveying unit configured to convey the tool between the wheel and a machine tool body equipped with at least a spindle head to and from which the tool is attached and detached, in which in a view of the wheel from the machine tool body side along the horizontal axis, a tool attachment/detachment position where the tool is attached to and detached from the pod by the conveying unit is set between a 9 o'clock direction and a 12 o'clock direction, with a zenith of the wheel being the 12 o'clock direction.

Here, according to the present invention, the tool attachment/detachment position is not set at positions in the 9 o'clock direction and the 12 o'clock direction. In other words, the tool attachment/detachment position is set using a horizontal plane including the rotation axis of the wheel as a reference such that the smaller angle between the horizontal plane and a virtual line connecting the tool attachment/detachment position and the rotation center of the wheel is greater than 0 degrees and less than 90 degrees.

With this structure, the tool attachment/detachment position is set between the 9 o'clock direction and the 12 o'clock direction, and therefore the conveying unit can be disposed closer to the center of the wheel relative to a maximum outer diameter portion in the 9 o'clock direction, and at a higher position than in the conventional technology. As a result, even if the wheel and the machine tool body are brought close to each other, a mechanism for oscillating the table, for example, can be disposed below the conveying unit, enabling a compact configuration. In addition, since the conveying unit attaches and detaches the tool to and from the pod and conveys only the tool, the conveying weight can be reduced, making it easier to transport it safely. In addition, for example, when a plurality of the wheels are provided in series, the conveying unit can be used to rearrange the tools between the wheels, thereby improving tool exchange efficiency.

In order to make it possible to move the tool by utilizing the space obliquely above the wheel and to eliminate the need for a complicated operation when attaching and detaching the tool, the conveying unit may insert the tool into and remove the tool from the pod while the distal end of the tool faces upward and is inclined with respect to a horizontal plane.

In order to increase the diameter of the wheel to increase the number of tools that can be attached to the wheel without being limited by the maximum height at which tools can be exchanged in the machine tool body, the conveying unit may include: a horizontal conveying mechanism for conveying the tool horizontally; and a vertical conveying mechanism for conveying the tool vertically.

In order to realize tool conveyance with a simple structure by allowing the tool to be conveyed horizontally while keeping the distal end side of the tool facing obliquely upward, the horizontal conveying mechanism may include: an advancing/retracting unit configured to advance and retract the tool obliquely between the tool attachment/detachment position and a first retracted position at which the tool is removed from the pod and separated a predetermined distance from the pod; and a horizontal movement unit configured to horizontally move the tool held by the advancing/retracting unit between the first retracted position and a second retracted position horizontally separated from the first retracted position toward the machine tool body side.

In order for the horizontal conveying mechanism to move the tool horizontally at a position higher than the position at which the tool can be exchanged in the machine tool body, thereby enabling tool exchange in the same manner as in the conventional technology even when a space is formed below the conveying unit, the vertical conveying mechanism may include: a standby pod to and from which the tool is attached and detached; and a vertical movement unit configured to vertically convey the tool between a standby position where the tool is attached to and detached from the standby pod and a tool exchange position where the tool attached to the standby pod is exchanged with another tool attached to the spindle head.

In order to enable the tool to be attached and detached at an elevated position on the wheel while enabling tool exchange at the same height as in the conventional technology, the vertical movement unit may be configured to move the standby pod vertically while changing the orientation of the standby pod between the standby position and the tool exchange position.

In order to facilitate use of, for example, an existing automatic tool exchange method by making the orientation of the tool at the tool exchange position the same as the orientation when the tool is attached to the spindle head, the axial direction of the spindle head may extend horizontally, the horizontal conveying mechanism may be configured to convey the tool with its distal end facing obliquely upward, and the vertical movement unit may be configured such that, at the standby position, the tool is attached to and detached from the standby pod with its distal end facing obliquely upward, and at the tool exchange position, the distal end of the tool attached to the standby pod faces horizontally.

In order to enable high-speed and reliable tool exchange when the tool removed from the elevated position of the wheel is lowered to the tool exchange position by the vertical conveying mechanism, the conveying unit may further include an ATC unit configured to perform tool exchange between the vertical conveying mechanism and the spindle head.

If the machine tool includes the machine tool body and the tool magazine device, there is no need to install the wheel at a distance from the machine tool body, and it is possible to provide a large number of driving units without interference, as is the case with, for example, a 5-axis machining center, while maintaining a compact configuration.

### Advantageous Effects of the Invention

As described above, with the magazine device of the present invention, in the upper space that was not previously used because the tool attachment/detachment positions were set in the 9 o'clock direction and the 12 o'clock direction, most of the conveying unit can be disposed, and a large space can be created below it. As a result, it is possible to provide a portion of the machine tool body below the conveying unit, and therefore the wheel and the machine tool body can be placed close to each other, enabling the entire machine tool to be configured compactly. Such an effect becomes prominent, for example, when the wheel is enlarged to increase the number of tools that can be mounted on it.

### Brief Description of Drawings

FIG. 1 is a schematic perspective view showing the external appearance of a machine tool in a first embodiment of the present invention.
FIG. 2 is a schematic side view showing a machine tool body of the machine tool and a magazine device in the first embodiment.
FIG. 3 is a schematic perspective view showing an overall configuration of the magazine device according to the first embodiment.
FIG. 4 is a schematic diagram showing removal of a tool from a wheel by a conveying unit in the first embodiment.
FIG. 5 is a schematic diagram showing a horizontal conveying operation of a tool by the conveying unit in the first embodiment.
FIG. 6 is a schematic diagram showing a vertical conveying operation of a tool by the conveying unit in the first embodiment.

### Description of Embodiments

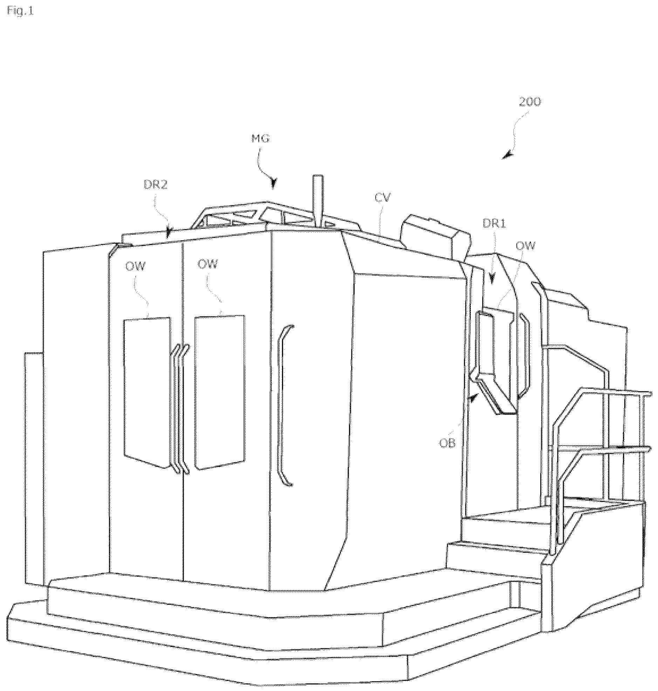

Hereinafter, a magazine device 100 according to a first embodiment of the present invention and a machine tool 200 using the magazine device 100 will be described with reference to FIGS. 1 to 6.

FIG. 1 shows the external appearance of the machine tool 200. In this specification, the term "machine tool 200" is a concept that encompasses various devices including a function of machining a workpiece. In this specification, a horizontal machining center will be described as an example of the machine tool 200, but the machine tool 200 is not limited to this. For example, the machine tool 200 may be a vertical machining center. In addition, the machine tool 200 may be a turning center, a 5-axis machine, or a multi-axis machine. Additionally, the machine tool 200 may be a grinder or other cutting machine. In addition, machining is not a concept that only includes subtractive machining, but can also include additive machining.

As shown in FIG. 1, the machine tool 200 includes a cover body CV that separates the inside of the machine from the outside, a plurality of openable and closable doors DR1 and DR2, and an operation panel OB. Inside this machine tool 200, a machining area where cutting is performed, and a standby area that is partitioned by an inner door and where the next workpiece is placed on a pallet are set so as to be divided from each other. One door is the machining area door DR1 for accessing the machining area from outside the machine, and the other door is the standby area door DR2 for accessing the standby area from outside the machine. Each door has an observation window OW through which the inside of the machine can be observed from outside. The operation panel OB1 is provided near the machining area door DR1. The operator stands in front of the operation panel OB and in front of the machining area door DR1. That is, the operator can see what is happening inside the machine, and in particular the coolant supply status, through the observation window OW by simply turning his or her body slightly toward the machining area while operating the operation panel OB.

The machine tool 200 in the first embodiment is a 5-axis machining center in which the workpiece and the tool T can move relative to each other along three orthogonal axes, namely the X-axis, Y-axis, and Z-axis directions, and the orientation of the workpiece can be changed by rotating the workpiece in each of two directions.

This machine tool 200 is configured as a horizontal machining center such that the tool T faces horizontally. In addition, the direction in which the tool T faces is defined as the Z-axis, the movement direction of the tool T horizontally orthogonal to the Z-axis is defined as the X-axis, and the movement direction of the tool T vertically orthogonal to the Z axis is defined as the Y-axis. In the initial state, a first rotation axis having an axis parallel to the X-axis is defined as an A-axis, and a second rotation axis having an axis parallel to the Y-axis is defined as a B-axis.

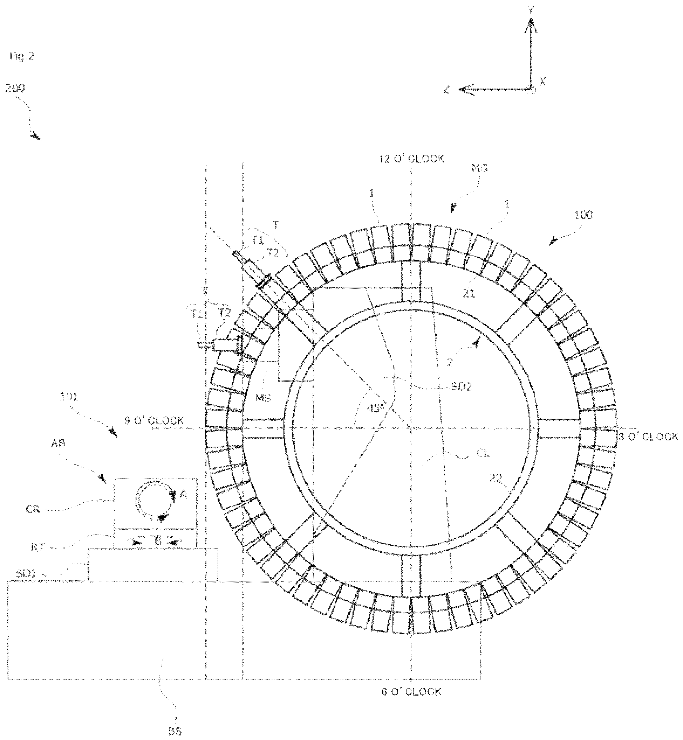

To give an overview of each mechanism, as shown in FIG. 2, a machine tool body 101 in the machine tool 200 of the first embodiment includes a bed BS extending in the Z-axis direction, and a column CL standing in the Y-axis direction relative to the bed BS. Here, FIG. 2 shows the internal structure as viewed from the machining area door DR1 side, with the machine tool body 101 illustrated by imaginary lines on the near side and the magazine device 100 illustrated by solid lines on the far side.

As shown in FIG. 2, a pair of guide surfaces extending in the Z-axis direction are formed on the bed BS, and a first saddle SD1 for moving the workpiece in the Z-axis direction is provided on the guide surfaces. The first saddle SD1 is controlled to a predetermined position in the Z-axis direction of the workpiece by a Z-axis direction drive mechanism equipped with a ball screw, a servo motor, and the like (not shown). An AB-axis unit AB for rotating the workpiece about the A-axis and the B-axis is mounted on this first saddle SD1. This AB-axis unit AB includes a table RT to which a workpiece is fixed and that is rotatable about the B-axis, an oscillator CR that supports the table RT, and a pair of rotation control devices that rotate the oscillator CR about the A-axis and control its rotation angle.

A pair of guide surfaces extending in the X-axis direction are formed on the side surfaces of the column CL, and a second saddle SD2 is provided on the guide surfaces. The second saddle SD2 is controlled to a predetermined position in the X-axis direction by an X-axis direction driving function equipped with a ball screw, a servo motor, and the like (not shown). The second saddle SD2 includes a Y-axis direction drive mechanism for driving a spindle head MS, to which the tool T is attached with the tool T facing in the Z-axis direction, in the Y-axis direction and controlling the spindle head MS to a predetermined position.

The magazine device 100 stores a large number of tools T to be attached to the spindle head MS, and performs exchange of the tool T designated by, for example, an NC program with the spindle head MS. This magazine device 100 is a so-called wheel 2 type, and holds a large number of tools T arranged in a circular ring shape (perfect circle) on the outer circumference of a wheel 2 that is rotatable about a horizontal axis. More specifically, the wheel 2 is equipped with pods 1 that are provided in a circular ring shape on the outer circumference and to which the base end sides of the tools T are detachably attached, the pods 1 being configured to grip the end portions of the tools T through, for example, hydraulic drive. That is, the tools T that are held are attached such that their distal ends face radially outward of the wheel 2. Note that in each drawing, the notation of the tools T is omitted except for a few, but in actual use, a large number of tools T are attached to each pod 1 of the wheel 2.

The tool T is constituted by a cutting tool T1 on the distal end side and a holder T2 on the base end side. The cutting tool T1 is prepared according to the machining purpose, such as an end mill, a face mill, or a drill. The holder T2 holds the cutting tool T1 and is fixed to the spindle head MS and the pod 1. As shown in FIG. 2, in the first embodiment, when the wheel 2 is viewed from the machine tool body 101 side and the zenith of the wheel 2 is in the 12 o'clock direction, a tool T located between the 9 o'clock direction and the 12 o'clock direction on the wheel 2 is conveyed to the machine tool body 101 side and exchanged with a tool T attached to the spindle head MS. Here, the position in the Z-axis direction at which the tool T is attached to the spindle head MS is set inside the outer circumference of the wheel 2. The smaller angle between a straight line connecting the attachment/detachment position of the tool T on the wheel 2 and the center of rotation of the wheel 2, and a horizontal plane including the rotation axis of the wheel 2 is set to, for example, 45 degrees. Note that this angle is not limited to 45 degrees, and may be set, for example, in the 10 o'clock direction (30 degrees).

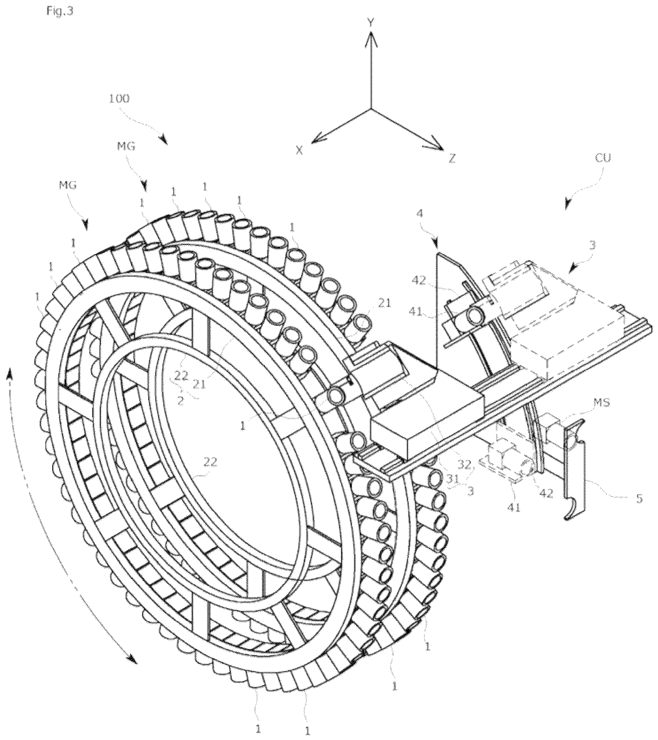

The magazine device 100 will be described in detail below with reference to FIGS. 3 to 6. As shown in FIG. 3, the magazine device 100 includes wheel magazines MG each including a wheel 2 and a large number of pods 1, and a conveying unit CU that conveys a tool T between the wheel magazines MG and the machine tool body 101. In this embodiment, two wheel magazines MG are provided side by side in the X-axis direction, but the number may be greater or may be only one. The conveying unit CU includes a horizontal conveying mechanism 3 that conveys the tool T horizontally, a vertical conveying mechanism 4 that conveys the tool T vertically, and an ATC unit 5 that performs tool exchange with the tool T on the spindle head MS. The tool T attached to the wheel magazine MG is conveyed in the X-axis direction by the horizontal conveying mechanism 3 with its distal end facing obliquely upward, and then is transferred from the horizontal conveying mechanism 3 to the vertical conveying mechanism 4. The vertical conveying mechanism 4 moves the received tool T vertically, while changing the orientation of the tool T from a state in which the distal end side faces obliquely upward at the upper end to a state in which the distal end side faces horizontally at the lower end. When the tool T is conveyed to the lower end by the vertical conveying mechanism 4, the ATC unit 5 exchanges the tool T with the tool T on the spindle head MS. Here, since the ATC unit 5 has the same structure as an existing one, the wheel magazine MG, the horizontal conveying mechanism 3, and the vertical conveying mechanism 4 will be described in detail below.

In the wheel magazine MG, an inner wheel 22, which is driven by a drive system (not shown) and a rack and pinion, and an outer wheel 21, to which a large number of pods 1 are attached, are connected to each other by spokes. The inner circumferential surface of the outer wheel 21 is rotatably supported by a support mechanism (not shown). Each wheel magazine MG is configured to be independently rotatable about a horizontal axis, and the tool T to be exchanged is indexed to a 45-degree position. One tool T may be attached to each of the adjacent pods 1, or in the case of a tool T with a large diameter, a neighboring pod 1 may be opened for use.

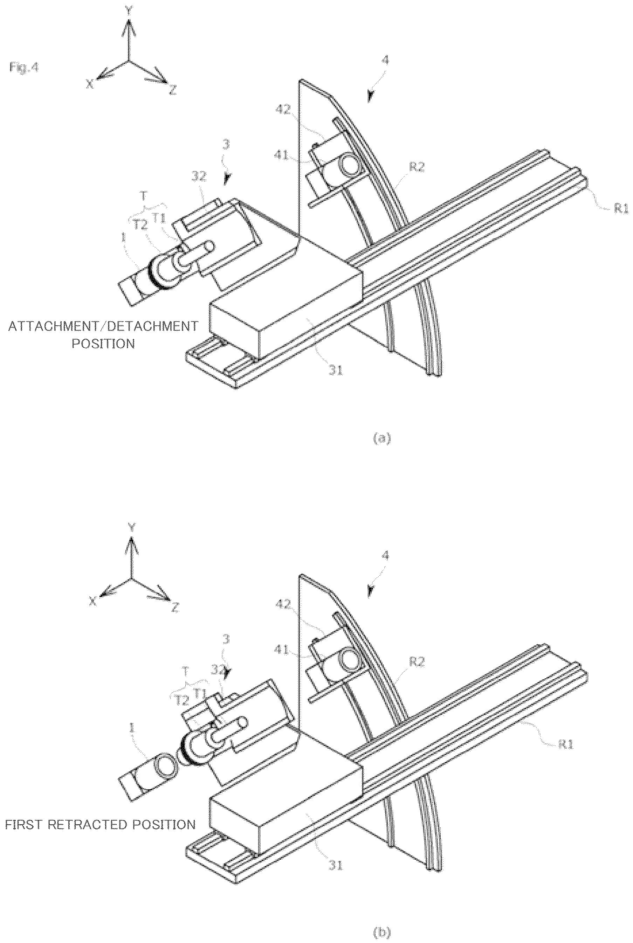

As shown in FIG. 4, the horizontal conveying mechanism 3 includes a horizontal movement unit 31 that moves the tool T horizontally, and an advancing/retracting unit 32 that is provided on the horizontal movement unit 31 and moves the tool T obliquely relative to the pod 1 provided on the wheel 2 or a standby pod 41 of the vertical conveying mechanism described later, to attach and detach the tool T. The horizontal movement unit 31 travels on a straight rail R1 that extends in the X-axis direction, and includes a drive system including, for example, a motor, a gear, and the like. The advancing/retracting unit 32 is equipped with claws that clamp and grasp a holder T2 of the tool T, and is configured to be movable obliquely in a direction that is 45 degrees with respect to the Z axis within the XZ plane. The advancing/retracting unit 32 includes a drive unit that is driven, for example, by hydraulic pressure or pneumatic pressure. FIG. 4(a) shows a state in which the horizontal conveying mechanism 3 at the tool T attachment/detachment position inserts or removes the tool T into or from the pod 1 facing obliquely upward. Upon grasping the holder T2 of the tool T, the advancing/retracting unit 32 moves a predetermined distance to a first retracted position located obliquely upward as shown in FIG. 4(b). At the first retracted position, the base end of the tool T is completely removed from the pod 1.

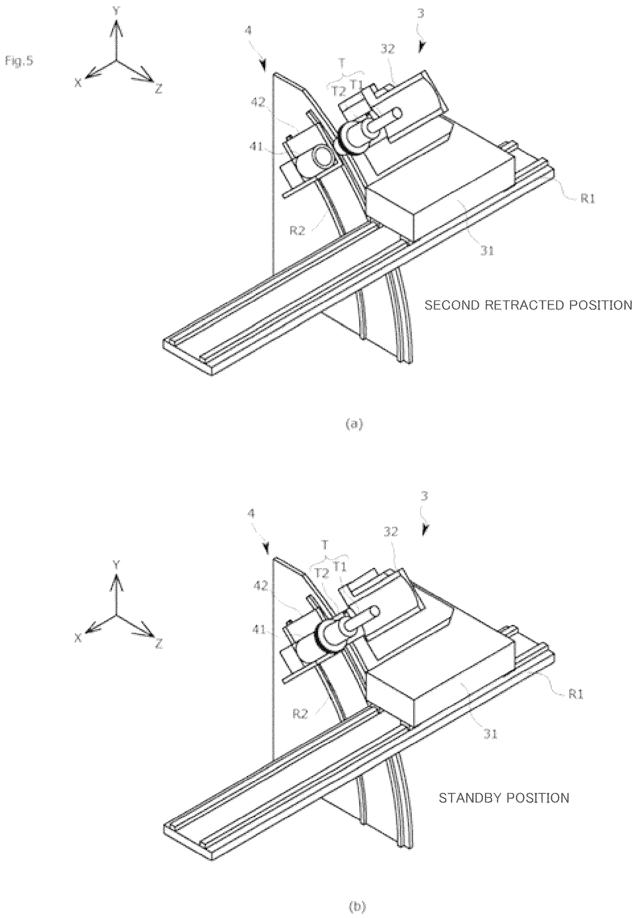

When the tool T is removed from the pod 1 by the advancing/retracting unit 32, the tool T is moved along the X-axis direction from the first retracted position to a second retracted position by the horizontal movement unit 31 as shown in FIG. 5(a). Thereafter, as shown in FIG. 5(b), the advancing/retracting unit 32 moves obliquely downward, whereby the tool T moves from the second retracted position to a standby position where it is attached to or detached from the standby pod 41 of the vertical conveying mechanism.

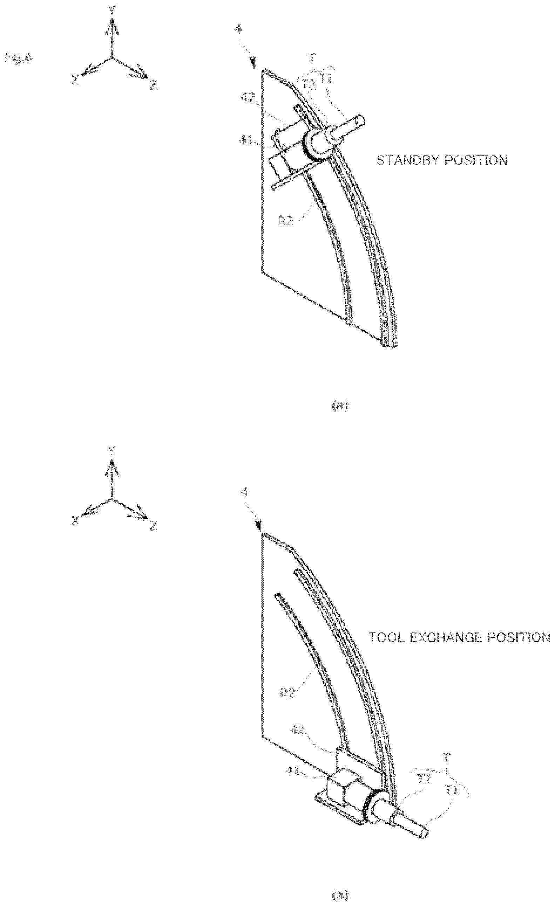

As shown in FIGS. 5 and 6, the vertical movement mechanism includes the standby pod 41 for transferring the tool T between the vertical movement mechanism and the horizontal movement mechanism, and a vertical movement unit 42 for moving the standby pod 41 vertically. The standby pod 41 has the same structure as the pods 1 of the wheel 2, and when the tool T is inserted into the standby pod 41, a part of the holder T2 is fixed by hydraulic pressure. The vertical movement unit 42 is configured to move the tool T up and down while changing the orientation of the tool T. The vertical movement unit 42 travels on a curved rail R2, and moves up and down while rotating the standby pod 41 by a drive mechanism (not shown). When the vertical movement unit 42 is at the upper end, the opening of the standby pod 41 faces obliquely upward, and when the vertical movement unit 42 is at the lower end, the opening of the standby pod 41 faces horizontally (in the Z-axis direction). That is, the vertical movement unit 42 moves the tool T between a standby position and a tool exchange position while changing the orientation of the tool T in the vertical direction.

The tool exchange position is set, for example, using the ATC unit 5 as a reference, at a position that is approximately symmetrical across a plane to the position of the tool T attached to the spindle head MS when tool exchange is performed. Due to the ATC unit 5 performing rotational and advancing/retracting operations, the tool T attached to the standby pod 41 is exchanged with the tool T attached to the spindle head MS. The tool T removed from the spindle head MS is inserted into the standby pod, and is stored in the pod 1 of the wheel magazine MG by performing the operations of the conveying unit CU shown in FIGS. 6 to 4 in reverse. In addition, while the standby pod 41 is moving up and down or while standing by for tool exchange, only the horizontal conveying mechanism 3 can be operated independently to exchange or rearrange the tools T between each wheel magazine MG.

With the tool T magazine device 100 configured in this manner, most of the conveying unit CU can be provided at a higher position compared to the conventional case in which the conveying mechanism is provided at the 9 o'clock position on the wheel 2. Accordingly, a large space can be easily formed below the conveying unit CU, and a part of the AB-axis unit can also be provided to change the orientation of the workpiece. Accordingly, the machine tool body 101 and the magazine device 100 can be provided close to each other in the X-axis direction, and the machine tool 200 can be made compact while increasing the number of tools T that can be stored.

In addition, a space for disposing the horizontal conveying mechanism 3 is provided between the 9 o'clock direction and the 12 o'clock direction of the wheel 2, and the height of the horizontal conveying mechanism 3 is configured to be lower than the zenith of the wheel 2. For this reason, the overall height of the machine tool 200 is not increased. For example, when transporting the machine tool 200 for export or the like, height restrictions may arise, and it is possible to pack the machine tool 200 with only the minimum amount of disassembly required to comply with such restrictions.

Since only the tool T is conveyed instead of conveying the pod 1 to which the tool T is attached, the conveying weight can be reduced, and safety can be maintained even without, for example, significantly increasing the gripping force of the advancing/retracting unit 32 of the horizontal conveying mechanism 3. Accordingly, safety is easily maintained even when conveying the tool T at an elevated position.

The tool T is attached to and detached from the pod 1 provided on the wheel 2 and the standby pod 41 of the vertical conveying mechanism 4 while the distal end of the tool T is kept facing obliquely upward. For this reason, a simple configuration can be achieved. In addition, when inserting the tool T into the pod 1, its own weight can be utilized, making it easy to insert. Accordingly, the weight and output of the conveying unit CU installed at an elevated position can be reduced.

The horizontal conveying mechanism 3 and the vertical conveying mechanism 4 are independent, and the vertical conveying mechanism 4 is equipped with a separate standby pod 41. Therefore, while a tool is being exchanged or during standby, the horizontal conveying mechanism 3 can move the tools T attached to each wheel magazine MG in parallel. That is, conventionally, the arrangement of the many tools T stored in the magazine device 100 had to be carried out only during downtime when no processing or the like was being carried out. In contrast to this, with the machine tool 200 of the first embodiment, the tools T can be arranged while machining a workpiece, thereby making it possible to improve the efficiency of machining and minimize downtime.

Other embodiments will now be described. The tool attachment/detachment position is not limited to the position described in the first embodiment, but may be set between the 9 o'clock direction and the 12 o'clock direction. From the viewpoint of suppressing the maximum height of the machine due to providing the conveying unit, it is advisable to set the tool exchange position, for example, between the 10 o'clock direction and the 11 o'clock direction. In this case, the 10 o'clock direction and the 11 o'clock direction may be included.

The horizontal conveying mechanism was configured to convey the tool horizontally while maintaining the orientation of the tool at the tool attachment/detachment position, but the tool may also be conveyed after first changing the orientation to one required at the tool exchange position, for example. That is, the advancing/retracting unit may be configured not only to advance and retract the tool, but also to change the orientation of the tool in accordance with the advancing and retracting.

The vertical conveying mechanism may be omitted. For example, if the maximum height to which the main head can be moved in the machine tool body is the same as the position of the horizontal conveying mechanism, tool exchange may be performed without vertical movement.

In addition, various modifications of the embodiments and combinations of parts of each embodiment may be made without departing from the spirit of the present invention.

### List of Reference Numerals

- 200: Machine tool

- 100: Magazine device
- 1: Pod
- 2: Wheel
- CU: Conveying unit
- 3: Horizontal conveying mechanism
- 31: Horizontal movement unit
- 32: Advancing/retracting unit
- 4: Vertical conveying mechanism
- 41: Standby pod
- 42: Vertical movement unit
- 5: ATC unit
- 101: Machine tool body

## Claims

1. A tool magazine device comprising:
a wheel rotatable about a horizontal axis;
a plurality of pods that are arranged circumferentially on the wheel to form a circular ring shape on the wheel, and are configured to hold distal ends of tools with the distal ends facing radially outward of the wheel; and
a conveying unit configured to convey the tool between the wheel and a machine tool body equipped with at least a spindle head to and from which the tool is attached and detached,
wherein in a view of the wheel from the machine tool body side along the horizontal axis, a tool attachment/detachment position where the tool is attached to and detached from the pod by the conveying unit is set between a 9 o'clock direction and a 12 o'clock direction, with a zenith of the wheel being the 12 o'clock direction.

2. The tool magazine device according to claim 1, wherein the conveying unit inserts the tool into and removes the tool from the pod while the distal end of the tool faces upward and is inclined with respect to a horizontal plane.

3. The tool magazine device according to claim 2,
wherein the conveying unit includes:
a horizontal conveying mechanism for conveying the tool horizontally; and
a vertical conveying mechanism for conveying the tool vertically.

4. The tool magazine device according to claim 3,
wherein the horizontal conveying mechanism includes:
an advancing/retracting unit configured to advance and retract the tool obliquely between the tool attachment/detachment position and a first retracted position at which the tool is removed from the pod and separated a predetermined distance from the pod; and
a horizontal movement unit configured to horizontally move the tool held by the advancing/retracting unit between the first retracted position and a second retracted position horizontally separated from the first retracted position toward the machine tool body side.

5. The tool magazine device according to claim 3,
wherein the vertical conveying mechanism includes:
a standby pod to and from which the tool is attached and detached; and
a vertical movement unit configured to vertically convey the tool between a standby position where the tool is attached to and detached from the standby pod and a tool exchange position where the tool attached to the standby pod is exchanged with another tool attached to the spindle head.

6. The tool magazine device according to claim 5,
wherein the vertical movement unit is configured to move the standby pod vertically while changing the orientation of the standby pod between the standby position and the tool exchange position.

7. The tool magazine device according to claim 6,
wherein the axial direction of the spindle head extends horizontally,
the horizontal conveying mechanism is configured to convey the tool with its distal end facing obliquely upward, and
the vertical movement unit is configured such that, at the standby position, the tool is attached to and detached from the standby pod with its distal end facing obliquely upward, and at the tool exchange position, the distal end of the tool attached to the standby pod faces horizontally.

8. The tool magazine device according to claim 4,
wherein the conveying unit further includes:
an ATC unit configured to perform tool exchange between the vertical conveying mechanism and the spindle head.

9. A machine tool comprising:
the machine tool body; and
the tool magazine device according to any one of claims 1 to 8.
